# FASCICULE DE BREVET EUROPEEN

(11) **EP 1 902 483 B1**
(45) Date de publication et mention de la délivrance du brevet: **22.08.2018**
(21) Numéro de dépôt: 06778759.8
(22) Date de dépôt: 04.07.2006
(51) Int. Cl.: H01M 2/20

(54) **SYSTEME D INTERCONNEXION POUR UN ENSEMBLE DE STOCKAGE D ENERGIE**
VERBINDUNGSSYSTEM FÜR ENERGIESPEICHEREINHEITEN
INTERCONNECTION SYSTEM FOR AN ENERGY STORAGE ASSEMBLY

(30) Priorité: 13.07.2005 FR 0507527
(43) Date de publication de la demande: 26.03.2008
(73) Titulaire: Blue Solutions, 29500 Ergué Gabéric (FR)
(72) Inventeur: NEDELEC, Luc, F-29460 L'HOPITAL CAMFROUT (FR)
(74) Mandataire: Regimbeau
(86) Numéro de dépôt international: PCT/FR2006/001572
(87) Numéro de publication internationale: WO 2007/006898

(56) Documents cités:
- EP-A- 0 571 235
- GB-A- 359 441
- US-B1- 6 410 184

## Description

### Domaine de l'invention

Le domaine de l'invention concerne les technologies des ensembles de stockage d'énergie. Plus précisément, la présente invention concerne un système et un procédé d'interconnexion d'un ensemble de stockage d'énergie avec un support électronique de contrôle de son état de santé.

L'invention concerne également un ensemble de stockage d'énergie muni d'un tel système d'interconnexion.

### Présentation de l'Art antérieur

Afin de fournir la production d'énergie nécessaire demandée pour la plupart des applications commerciales des ensembles de stockage d'énergie, et particulièrement les applications automobiles, un nombre important de technologies dites technologies de haute énergie ont récemment été développées, comme, par exemple, la technologie lithium polymère.

De telles technologies ont des caractéristiques qui nécessitent des améliorations de la part des fabricants d'ensembles de stockage d'énergie, et particulièrement, dans le domaine de l'optimisation des performances des connexions de contrôle des ensembles.

Aujourd'hui, dans un mode type d'opération d'un ensemble de stockage de haute énergie, il est bien connu que des phénomènes indésirables sont engendrés pendant la charge ou la décharge de l'ensemble lorsqu'une de ses cellules de stockage d'énergie constitutives a des caractéristiques qui diffèrent de manière significative de celles des autres cellules avec lesquelles elle est connectée pour produire le niveau d'énergie désiré.

Une surtension ou une surcharge sont des exemples de phénomènes provoqués par la présence d'une cellule défectueuse. Ils dégradent les performances et réduisent la durée de vie de l'ensemble de stockage d'énergie.

Selon un aspect d'un modèle d'ensemble de stockage d'énergie conventionnel, un support électronique programmable est intégré dans la construction pour contrôler et protéger les cellules de stockage d'énergie de ces phénomènes.

Ce support acquiert, d'une part, diverses caractéristiques de l'état de santé des cellules via un circuit de mesure câblé aux bornes polaires de chaque cellule de stockage d'énergie de l'ensemble.

D'autre part, il contrôle des circuits de dérivation de courant connectés aux cellules qui détournent le courant autour d'une cellule particulière lorsque un niveau de tension préfixé y est dépassé afin de prévenir tout dommage de l'ensemble.

Les composants électroniques de contournement partiel contrôlé présents généralement dans ce type de circuit, et plus particulièrement les résistances de dissipation d'énergie, doivent, également, être câblés sur les sommets de chaque cellule de stockage d'énergie.

Ce système de câblage filaire typiquement employé dans la fabrication des ensembles de stockage d'énergie conventionnels est généralement compliqué. Il offre peu de flexibilité lors de la connexion des cellules aux différents circuits.

De plus, le montage des câbles est encombrant, coûteux et consomme un temps non négligeable.

Le système de câblage est, également, très sensible aux perturbations électromagnétiques qui se propagent, par conduction le long des fils, et qui engendrent des phénomènes indésirables tels que des courts circuits et des interférences électriques dans les supports de contrôle.

Par ailleurs, les composants électroniques de dissipation d'énergie unitaires, dont le rôle est de présenter une résistance haute au passage de courant limitant ainsi la puissance délivrée par la cellule de stockage d'énergie et augmentant la génération de chaleur en son sein, présentent des densités surfaciques d'énergie dégagée très importantes. Ces densités étant difficilement récupérables, elles dégradent les cellules. Les documents US6410184 et GB359441 décrivent des systèmes d'interconnexion de batteries connus. L'invention a notamment pour but de pallier les inconvénients de l'art antérieur.

Un but de la présente invention est de proposer un système d'interconnexion des cellules de stockage d'énergie d'un ensemble avec un support électronique de contrôle de l'état de santé de cet ensemble qui apporte une connexion simple, flexible, sécurisée et fiable.

Un autre but de la présente invention est de fournir un système d'interconnexion présentant une liberté de configuration géométrique importante, notamment en trois dimensions, tout en conservant une précision de connexion efficace.

Il est également désirable de proposer un système d'interconnexion qui offre une économie évidente en termes de coûts, de poids, d'espace dans la réalisation d'un ensemble de stockage d'énergie.

Un autre but de la présente invention est de fournir un système d'interconnexion qui modère l'impact d'une cellule défectueuse sur les performances d'un ensemble de stockage d'énergie et qui offre une dissipation d'énergie efficace dans cet ensemble.

### Résumé de l'invention

Ces buts sont atteints, selon l'invention, grâce à un système d'interconnexion de cellules de stockage d'énergie, connectées électriquement pour former un ensemble de stockage d'énergie, avec un support électronique de contrôle, chacune desdites cellules de stockage d'énergie étant dotée sur son sommet de bornes polaires , le système d'interconnexion étant caractérisé en ce que il comprend un support d'interconnexion flexible, ledit support comportant un circuit conducteur formé sur une surface électriquement conductrice, ledit circuit formant liaison électrique entre le support électronique de contrôle et les bornes polaires auxquels il est connecté, respectivement, grâce à des moyens de connexion et grâce à des moyens de retenue, lesdits moyens de retenue étant d'une part, adaptés pour venir en contact, sur les bornes polaires ,avec des moyens d'appui en vue de disposer les bornes polaires sur le support d'interconnexion, et d'autre part, aptes à réaliser une connexion électrique directe des bornes polaires au circuit conducteur. Le support d'interconnexion selon l'invention est flexible.

Selon l'invention, le système présente un circuit conducteur configuré pour présenter, pour chacune des cellules de stockage d'énergie, un circuit de mesure de tension aux bornes de chaque cellule activable/désactivable indiquant un état d'énergie de la cellule et un circuit de dérivation du courant traversant chaque cellule activable/désactivable selon l'état d'énergie de la cellule, ledit circuit de dérivation étant défini au moins par des éléments limiteurs de courant.

Selon une autre caractéristique avantageuse de l'invention, ces éléments limiteurs de courant sont des résistances de dissipation d'énergie.

D'autre part, l'invention concerne également un procédé d'interconnexion de plusieurs cellules de stockage d'énergie, connectées électriquement pour former un ensemble de stockage d'énergie, avec un support électronique de contrôle, chacune desdits cellules de stockage d'énergie étant dotée sur son sommet de bornes polaires, le procédé étant caractérisé en ce qu'il met en oeuvre une étape d'interconnexion au moins réalisée par :
- la formation d'un circuit conducteur sur une surface électriquement conductrice d'un support d'interconnexion flexible déposé sur le sommet desdites cellules, ledit circuit formant liaison électrique entre le support électronique de contrôle et les bornes polaires de chaque cellule;
- la connexion audit circuit conducteur du support électronique de contrôle;
- la mise en contact de moyens d'appui des bornes polaires avec des moyens de retenue du support d'interconnexion en vue de disposer les bornes polaires sur le support d'interconnexion;
- la connexion électrique directe des moyens d'appui des bornes polaires avec les moyens de retenue du support d'interconnexion.

### Brève description des figures

L'invention sera mieux comprise et d'autres avantages et caractéristiques apparaîtront à la lecture de la description qui va suivre, donnée à titre d'exemple non limitatif, et grâce aux dessins annexés parmi lesquels :
- La figure 1 illustre une vue en perspective d'un ensemble de stockage d'énergie muni du système d'interconnexion selon l'invention;
- La figure 2 illustre une vue en perspective du système d'interconnexion selon l'invention ;
- La figure 3 illustre une vue latérale de l'assemblage d'une borne polaire d'une cellule de stockage d'énergie particulière avec le système d'interconnexion de l'invention ;
- La figure 4 illustre une vue partielle, en perspective, de l'assemblage en série de bornes polaires de cellules de stockage d'énergie via des moyens de connexion de puissance ;
- La figure 5 illustre une vue en perspective d'une borne polaire d'une cellule de stockage d'énergie particulière assemblée à un système de connexion de puissance ;
- La figure 6 illustre un schéma d'une partie du circuit électrique du système d'interconnexion selon l'invention ;
- La figure 7 illustre un schéma des différents points de mesure de potentiels et des résistances de dissipation d'énergie du circuit conducteur du système d'interconnexion selon l'invention ;
- La figure 8 illustre une vue schématique de la zone de connexion d'un système d'interconnexion selon l'invention avec un support électronique de contrôle.

### Description détaillée de l'invention

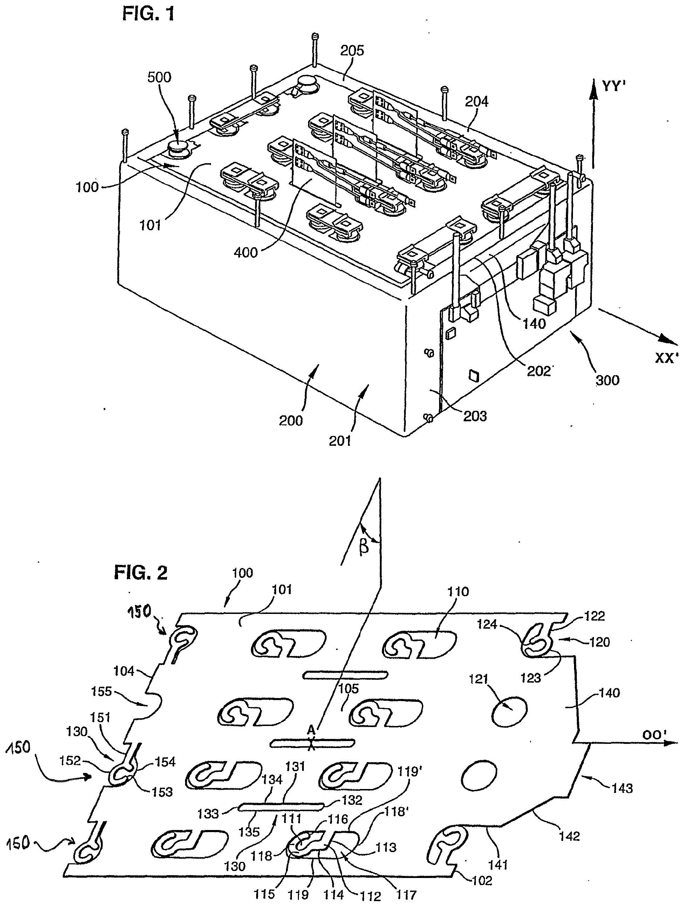

La figure 1 illustre un ensemble de stockage d'énergie 200 formé d'un arrangement de plusieurs cellules de stockage d'énergie individuelles (non visibles sur la figure) disposées dans la concavité d'une boîte rectangulaire formant un logement hermétique 201.

Cette boite 201 s'étend en longueur, sur la figure 1, suivant l'axe XX' et en hauteur, suivant l'axe YY'.

Les cellules de stockage d'énergie présentent, chacune, sur leur, sommet, deux bornes polaires 500 qui font saillie hors du logement 201, sur sa face supérieure 204 perpendiculaire à l'axe YY', cette face 204 étant munie d'un couvercle 205 supérieur comportant une ouverture rectangulaire centrale.

On distingue également, sur la figure 1, un support électronique de contrôle 300 disposé, parallèlement et, en contact de l'une des faces latérales 203 du logement 201 perpendiculaire à l'axe XX'. Le rôle de ce support 300 est d'assurer un contrôle de l'état de santé des différentes cellules de stockage d'énergie ainsi que de l'ensemble 200.

Un système d'interconnexion 100 selon l'invention est placé à plat sur la face supérieure 204 du logement 201 de manière à couvrir l'ouverture du couvercle 205 et, plus précisément, les sommets des cellules de stockage d'énergie présentant les bornes polaires 500.

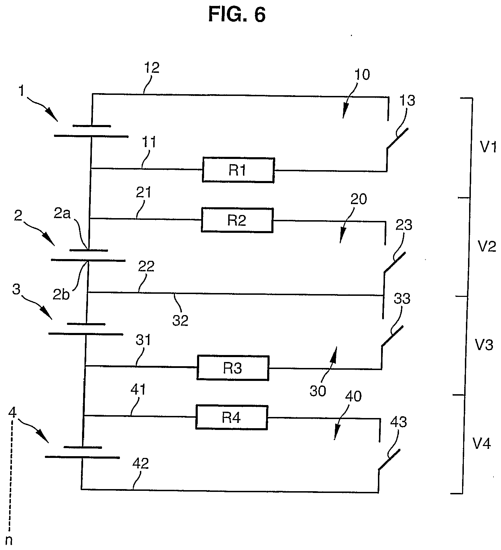

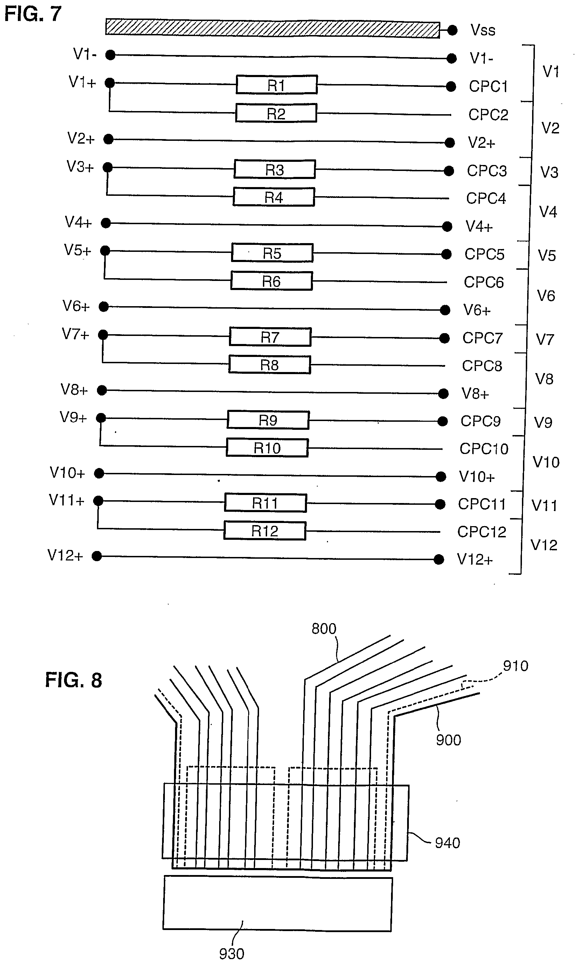

Ce système d'interconnexion 100 comprend des moyens de retenue pour les bornes polaires 500 de chaque cellule, des moyens de connexion au support électronique de contrôle 300 et un circuit conducteur particulier qui sera décrit plus loin en relation avec les figures 6 et 7.

Telle qu'illustré sur la figure 2, le système d'interconnexion 100 se présente sous la forme d'une plaque 101 mince sensiblement rectangulaire.

On définit, sur la figure 2, un axe OO' médian s'étendant le long du système d'interconnexion 100.

La plaque 101 se prolonge sur son extrémité 102 proche du support électronique de contrôle 300 par une zone de raccordement 140 destinée, par l'intermédiaire d'une terminaison électrique, à se connecter au support électronique de contrôle 300.

Cette zone 140 est définie par une surface 141 rectangulaire de largeur inférieure à celle de la plaque 101 qui se prolonge par une surface 142 qui converge vers la plaque 101 lorsqu'on s'éloigne perpendiculairement de l'axe OO'. Elle se termine par une surface rectangulaire 143 qui a une largeur adaptée pour la réception de la terminaison électrique.

Pour que le système d'interconnexion 100 soit installé sur le logement 201, la zone de raccordement 140 glisse dans une fente 202, prévue à cet effet, sur la face latérale 203 du logement 201 comprenant le support de contrôle 300 et vient se plaquer sur cette dernière pour être connecté au support 300 (voir figure 1).

La plaque 101 posée à plat sur la face supérieure 204 du logement 201 et la zone de raccordement 140 forment ainsi les deux portions perpendiculaires d'un coude présent à l'extrémité 102 proche du support de contrôle 300.

D'autre part, selon un aspect de l'invention, le système d'interconnexion 100 présente un certain nombre de découpes définissant des moyens de retenue 110, 120 et 150 du système d'interconnexion 100 sur les bornes polaires 500 des cellules de stockage d'énergie et, des moyens de réception 130 de plaques de chauffe 400 de l'ensemble de stockage d'énergie 200.

Les découpes définissant des moyens de retenue 110, 120 et 150 du système 100 sur les bornes polaires 500 sont disposées de manière sélective et permettent à ces dernières de faire saillie sur la face supérieure 204 du logement 201 de l'ensemble de stockage d'énergie 200, hors du système d'interconnexion 100 vers l'extérieur.

Dans un mode de réalisation préféré de l'invention, leurs natures diffèrent suivant qu'elles soient situées sur l'extrémité 102 proche du support de contrôle, l'extrémité opposée 104 ou sur la surface centrale 105 du système d'interconnexion 100.

Pourtant, de manière générale, pour toutes les découpes destinées aux moyens de retenue 110, 120 et 150, les distances entre chacune d'elles, selon l'axe OO' et, perpendiculairement à cet axe , correspondent, respectivement, à la distance entre les bornes polaires 500 d'une cellule de stockage d'énergie particulière et à la largeur d'une cellule.

De plus, les séries de découpes sont alignées dans le sens de l'axe OO' et dans le sens perpendiculaire à cet axe, ce qui correspond à l'alignement des cellules de stockage d'énergie dans le logement 201 de l'ensemble 200.

Par ailleurs, les découpes sont construites de manière symétrique par rapport à l'axe médian OO'.

Plus précisément, les moyens de retenue 110 présents loin des extrémités du système d'interconnexion 100 sont symétriques par rapport au point d'intersection (A) de l'axe médian OO' avec le plan perpendiculaire médian (B), les moyens de retenue 110 étant situés de par et d'autre de ce plan (B).

Selon un mode de réalisation préféré de l'invention, ils se présentent sous la forme d'une découpe 110 rectangulaire dont deux côtés opposés 118 et 118' sont en forme d'arc de cercle convexe, les deux autres 119 et 119' étant rectilignes le long du système d'interconnexion 100, égaux et parallèles.

Cette découpe 110 est divisée, au milieu de sa longueur, en deux parties 111 et 117 destinées à accueillir deux bornes polaires 500 de deux cellules différentes.

Une des parties 117 est vide tandis que l'autre partie 111 présente une bretelle de connexion 112 se prolongeant par un oeillet de connexion 115.

Cette bretelle 112 se présente sous la forme d'un coude dont l'une des portions 113, perpendiculaire à l'axe médian OO', est reliée au support d'interconnexion 101 au milieu de la longueur de la découpe 110 et l'autre portion 114 se prolonge sur le côté 118 sous la forme d'un arc de cercle 115 dont l'angle d'ouverture 116 débouche sur l'angle intérieur de la bretelle 112 coudée.

D'autre part, à l'extrémité 104 loin du support de contrôle 300, deux types de découpes 150 et 155 se présentent alternativement sur la largeur de la plaque 101. Plus précisément, deux découpes 150 sont situées d'un côté de l'axe OO', tandis que de l'autre côté une découpe 155 située près de l'axe OO' est suivie d'une découpe 150 placée vers l'extérieur.

Le premier type de découpe 150, sous forme d'un arc de cercle 154 débouchant vers l'extérieur de la plaque 101, présente une bretelle de connexion 151, droite, perpendiculaire à l'axe médian OO' et relié au support d'interconnexion 101 à son extrémité 104.

Elle se prolonge sur un oeillet 152 en forme d'arc de cercle dont l'angle d'ouverture 153 se présente vers la concavité de la découpe 150.

Le second type de découpe 155 est un arc de cercle 156 vide débouchant vers l'extérieur de la plaque d'interconnexion 101.

Sur l'extrémité 102 proche du support de contrôle près de la zone de raccordement 140, se présentent, également, alternativement, deux types de découpes 120 et 121. Plus précisément, un couple de découpes 120 et 121 est situé de chaque côté de l'axe OO', les découpes 121 étant placées près de l'axe OO'.

Le premier type de découpe 120 comprend une bretelle 122 et un oeillet d'interconnexion 123 comme à l'extrémité 104 opposée, à la seule différence que la bretelle 122 est plus courte à l'extrémité 102 proche du support de contrôle 300 du essentiellement à l'étroitesse de la plaque 101 de ce coté.

La seconde découpe 121 est une découpe circulaire.

Avantageusement, la forme spécifique des bretelles de connexion des différentes découpes 110, 120 et 150 a été choisie de façon à obtenir un maximum de longueur en empiétant le minimum sur la surface de la plaque 101 destinée à accueillir les pistes conductrices du circuit du système d'interconnexion 100.

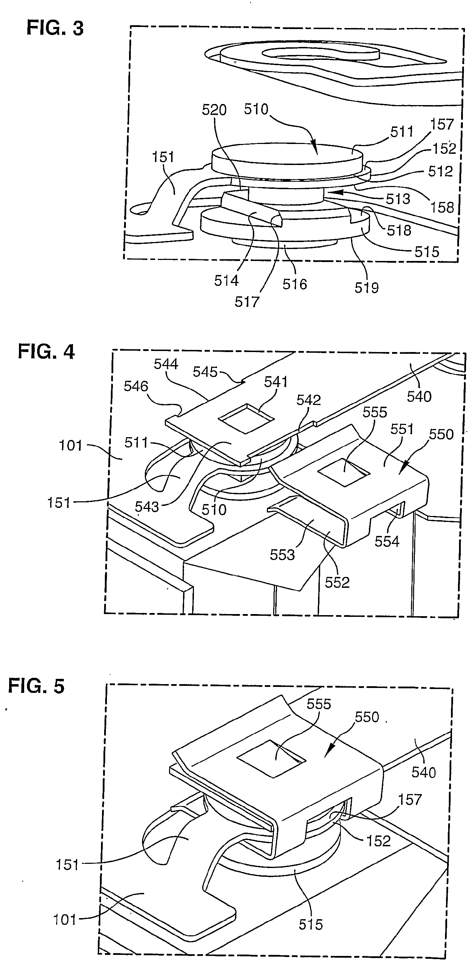

De plus, la longueur des bretelles permet de les déformer par torsion pour présenter l'ouverture des oeillets 115 face aux bornes polaires 500 auxquels ils sont destinés comme cela sera décrit plus loin en relation avec les figures 3, 4 et 5.

D'autre part, la symétrie générale des découpes et plus particulièrement des bretelles de connexion par rapport à l'axe médian OO' permet d'équilibrer le support d'interconnexion 101 du point de vue des forces que les bretelles vont exercer. En effet, de part leur comportement élastique, elles ont tendance à éloigner les oeillets d'interconnexion 115, 123 et 152 des bornes polaires 500 auxquelles ils vont être connectés.

De façon avantageuse, les oeillets 115 des moyens de retenue 110 présents loin des extrémités du système 10 possèdent des bretelles 112 coudées pour avoir la même longueur que celles des oeillets 152 et 123 situés en bordure du système d'interconnexion 100, tout en ne dépassant pas les parties 117 vides de la plaque 101 découpée pour le passage des bornes 500 de cellules, et en ne gênant pas le passage de celles-ci, l'orientation générale des oeillets restant symétrique par rapport à l'axe médian du système 100.

Par ailleurs, le système d'interconnexion 100 comprend des moyens de réception 130 pour les plaques de chauffe 400 de l'ensemble de stockage d'énergie 200.

Ces derniers 130 se présentent sous la forme de plusieurs découpes 131 fines rectangulaires dont deux côtés opposés 132 et 133 sont en forme d'arc de cercle convexe, les deux autres 131 et 135 étant rectilignes le long du système d'interconnexion 100, égaux et parallèles.

De préférence, elles sont placées parallèlement à l'axe médian OO' sur la surface centrale 105 du système d'interconnexion 100.

Une large variété de configurations de moyens de retenue 110, 120 et 150 et de moyens de réception 130 peut être dessinée sur la surface du support d'interconnexion 101 pour optimiser leur rôle de liaison mécanique et électrique avec les bornes polaires 500 des cellules mais également pour optimiser l'espace dédié au circuit conducteur du système d'interconnexion 100 ou encore ses conditions de fabrication.

D'autre part, le nombre, la surface, la forme, la nature, l'orientation des découpes peuvent faire l'objet de nombreuses variantes de réalisation. Elles ne sont pas limitées aux illustrations données sur les figures annexées.

L'assemblage du support d'interconnexion 100 avec les bornes polaires 500 des cellules de stockage d'énergie de l'ensemble 200 va maintenant être décrit en référence aux figures 3, 4 et 5.

Une borne polaire 500 d'une cellule particulière, représentée sur la figure 3, se présente sous la forme d'un cylindre 513 dont le rôle est d'assurer la conduction électrique de l'intérieur d'une cellule, où sont présents des éléments électrochimiques, vers l'extérieur. Ce cylindre 513 matérialise, sur la figure, l'arbre principal 513 de la borne polaire 500 disposé perpendiculairement au support d'interconnexion 101.

Ce cylindre 513 se prolonge par deux épaulements annulaires 510 et 515 de diamètre supérieur, un épaulement inférieur 515 présent à l'extrémité inférieure du cylindre 513 et un épaulement supérieur 510 présent à l'extrémité supérieure du cylindre 513.

Ils forment, par leurs faces intérieures 512 et 518, les branches d'une gorge annulaire 520.

D'autre part, à l'extrémité inférieure du cylindre 513, l'épaulement inférieur 515 est surmonté sur sa face intérieure 518 par une empreinte 514 carrée, coaxiale, qui va permettre le serrage de la borne polaire 500 sur le sommet de la cellule.

Cette empreinte 514 se termine par un chanfrein 517 définit par une surface qui converge vers l'épaulement inférieur 515 lorsqu'on se déplace radialement vers l'extérieur. Ce chanfrein 517 va permettre de faciliter la prise de l'outil de serrage avec la borne polaire 500.

L'épaulement inférieur 515 se prolonge également, sur sa face extérieure 519, par un second cylindre 516 coaxial, de diamètre inférieur, qui va jouer le rôle de liaison électrique directe avec les éléments électrochimiques présents à l'intérieur de la cellule de stockage d'énergie (non illustrée sur la figure).

Si on considère une découpe 150 située sur l'extrémité 104 loin du support de contrôle 300 comme l'illustre la figure 3, l'oeillet d'interconnexion 152 vient se glisser, latéralement, dans la gorge 520 formée par les deux épaulements 510 et 515.

Plus précisément, son angle d'ouverture 153 s'engage, de manière complémentaire, autour de l'arbre 513, au niveau de la gorge 520 précitée pour permettre à la surface supérieure 157 de l'oeillet 152 d'entrer en contact avec la partie inférieure 512 de l'épaulement supérieur 510 de la borne polaire 500.

L'angle d'ouverture 153 de l'oeillet 152 est adapté pour coincer l'oeillet 152 en position sur l'arbre 513.

Or, il existe une différence de hauteur entre la partie inférieure 511 de l'épaulement supérieure 510 de la borne polaire 500 et la surface supérieure 157 de l'oeillet d'interconnexion 152 du support d'interconnexion 101.

Afin de les mettre en contact, la différence d'altitude est compensée grâce à la bretelle d'interconnexion 151 qui se déforme par torsion. La longueur de la bretelle 151 va permettre de gérer une différence d'altitude entre l'oeillet 152 et le support 101 tout en autorisant l'alignement de l'oeillet 152 avec la borne polaire 500.

D'autre part, les cellules en prise avec le système d'interconnexion 100 par l'intermédiaire de leurs bornes polaires 500 sont connectées entre elles et plus précisément connectées en série telle que l'illustre la figure 1.

Un exemple de système de connexion de puissance utilisé pour connecter électriquement les cellules électrochimiques est illustré sur les figures 4 et 5.

Ce système comprend une pièce électroconductrice 540 ainsi que deux organes ressorts 550 pour raccorder en série deux bornes polaires 500 d'un couple de cellules électrochimiques.

Tel qu'illustré sur la figure 4, une borne polaire 500 d'une cellule particulière est liée avec une borne polaire 500 de la cellule voisine (non illustrée) par un barreau 540 de forme sensiblement rectangulaire.

Une extrémité 543 du barreau 540 est disposée à plat, perpendiculairement à l'arbre 513 de la borne polaire 500, sur la face supérieure 511 de l'épaulement supérieur 510.

A cette extrémité 543, le barreau 540 présente une découpe carrée 541, centrée sur l'arbre 513 de la borne polaire 500, qui va servir de repère pour la mise en place d'un organe ressort 550 assurant, d'une part, la prise de contact borne polaire 500/barreau 540 et d'autre part la prise de contact borne polaire 500/oeillet 152.

Ce barreau 540 présente également, à cette extrémité 543, de part et d'autre de la découpe carrée 541, des gorges 542 et 544 en forme de U s'étendant de chaque coté longitudinal du barreau 540. Les branches des gorges sont formées par la présence d'un épaulement 545 de largeur inférieure à celle du barreau prolongé par un second épaulement 546 de largeur identique à celui du barreau 540.

La longueur des gorges opposées 542 et 544 est identique et correspond sensiblement au diamètre de la borne polaire 500.

Ces gorges 542 et 544 vont permettre à une pièce (non illustré sur la figure) jouant le rôle de contact entre la borne polaire 500 et le barreau 540 de venir en prise avec ce dernier 540.

De préférence, ce barreau 540 est en cuivre étamé.

L'organe ressort 550 est lui constitué par un clip 550. Il assure la mise en contact de l'empilement oeillet d'interconnexion 152/épaulement supérieur 510 de la borne polaire 500/pièce de contact/barreau 540 en venant en prise avec cet ensemble par coulissement latéral perpendiculairement à l'arbre 513. Il se présente comme une pièce à section transversale en forme de U dont les deux branches, supérieure 551 et inférieure 552, sont prévues pour s'assembler, respectivement, avec la face supérieure du barreau 540 et avec l'oeillet d'interconnexion 152 en contact avec la face inférieure 512 de l'épaulement supérieur 510.

La branche inférieure 552 de l'organe ressort 550 se divise, sur sa longueur, en deux pattes 553 et 554 identiques, cette division se prolonge, perpendiculairement à l'arbre 513 sur la portion intermédiaire du clip 550.

Les deux pattes inférieures 553 et 554 viennent prendre appui sur la face inférieure 158 de l'oeillet d'interconnexion 152 et la branche supérieure 551 vient s'appuyer sur la face supérieure du barreau 540.

Tel qu'illustré sur la figure 5, l'oeillet 152 est mis en contact avec la face intérieure 512 de l'épaulement supérieur 510 de la borne 500 par l'intermédiaire des pattes inférieures 553 et 554 du clip 550.

D'autre part, l'organe ressort 550 présente sur sa branche supérieure 551 un ergot de verrouillage 555, carré, qui permet d'indiquer le bon positionnement de l'organe 550 sur le montage. Cet ergot 555 vient se placer, lors du coulissement, dans la découpe 541 carrée du barreau 540 et permet d'éviter que le clip 550 ne se déloge de la borne polaire 500 sous des contraintes mécaniques subies par l'ensemble de stockage d'énergie 200.

L'utilisation de l'organe ressort 550 permet d'appliquer des forces de compression continuelles aux cellules de stockage d'énergie.

La nature du système de connexion de puissance entre les cellules de stockage d'énergie peut faire l'objet de nombreuses variantes de réalisation. Celle ci ne doit pas être limitée à l'illustration faite sur les figures 3, 4 et 5 précédentes.

On a représenté sur les figures 6 et 7 le schéma électrique de l'impression conductrice 800 formée sur une surface électriquement conductrice de la plaque 101 du système d'interconnexion 100 qui va permettre de connecter l'ensemble de stockage d'énergie 200 au support de contrôle 300 de son état de santé.

Selon l'invention, le support d'interconnexion 101 comprend un substrat isolant sur lequel est déposé une feuille d'un matériau électriquement conducteur.

Cette feuille est traitée, de manière connue en soi, pour incorporer les pistes électriques du circuit conducteur 800 du système d'interconnexion 100.

De préférence, le support 101 est constitué d'une feuille mince d'aluminium sur un substrat isolant de type polyester.

Les natures du substrat isolant et de la feuille conductrice peuvent faire l'objet de nombreuses variantes de réalisation. En particulier, la surface conductrice peut être constituée d'une feuille de cuivre.

D'autre part, conformément à l'invention, le système d'interconnexion 100 est flexible. Ceci permet, comme illustré sur les figures précédentes, la torsion des bretelles de connexion des moyens de retenue 110, 120 et 150 et une configuration en trois dimensions du système d'interconnexion 100.

En se référant, maintenant, à la figure 6, un ensemble de n cellules de stockage d'énergie connectées en série est illustré.

Conformément à l'invention, chacune des cellules 1 à n est connectée, respectivement, à un circuit 10 à n0 configuré de manière à proposer un circuit de mesure de tension activable/désactivable indiquant l'état d'énergie d'une cellule particulière cellule et un circuit de dérivation de courant traversant chaque cellule activable/désactivable selon cet état d'énergie.

Pour une cellule de stockage d'énergie particulière 2, un circuit de dérivation 20 est connecté en parallèle à la cellule 2. Un conducteur 21 forme un chemin de dérivation de courant partant d'une borne polaire 2a de la cellule 2 et se dirige vers le support de contrôle 300 de l'ensemble de stockage d'énergie 200 où il est connecté à un moyen d'activation/désactivation 23.

Ce moyen d'activation/désactivation 23 est également connecté à une seconde piste 22 qui forme un chemin de retour de courant vers l'autre borne polaire 2b de la cellule 2.

De préférence, le moyen d'activation/désactivation 23 est un interrupteur.

La présence de moyens d'activation/désactivation 13 à n3 permet à chaque circuit de dérivation 10 à n0 d'opérer indépendamment des autres circuits connectés aux autres cellules.

De façon avantageuse, les moyens d'activation/désactivation 13 à n3 sont aptes à isoler électriquement la cellule à mesurer et au moins une des deux cellules adjacentes à la cellule à mesurer.

De façon préférentielle, les moyens d'activation/désactivation 13 à n3 sont aptes à isoler électriquement la cellule à mesurer et chacune des deux cellules adjacentes à la cellule à mesurer.

Ainsi, tout ou partie de chaque circuit de dérivation n0 est utilisé comme circuit de mesure de la cellule correspondante, et réciproquement, le circuit de mesure d'une cellule utilise tout ou partie du circuit de dérivation n0 des cellules adjacentes, ce qui permet de limiter le nombre de conducteurs présents sur le support 101 et de rationaliser le dessin et la forme des conducteurs présents.

D'autre part, conformément à l'invention, chaque circuit de dérivation n0 de courant inclut au moins un élément Rn électriquement résistif et thermiquement conducteur jouant le rôle de limiteur de courant.

De préférence, cet élément Rn est une résistance de dissipation d'énergie.

Ainsi, en s'appuyant sur la figure, le moyen d'activation/désactivation 23 du circuit de dérivation 20 varie entre un état conducteur et un état non conducteur et dérive une partie du courant traversant la cellule 2 de stockage d'énergie correspondante vers les résistances de dissipation de l'ensemble 200 lorsqu'il se trouve à l'état conducteur.

Selon un mode de réalisation préféré de l'invention, le routage des circuits de dérivation 10 à n0 est déterminé de façon à connecter les éléments Rn électriquement résistifs et thermiquement conducteurs alternativement sur la borne polaire positive d'une cellule de stockage d'énergie et sur la borne négative de la cellule de stockage d'énergie suivante en vue de limiter le nombre de conducteurs à configurer sur la surface conductrice du support d'interconnexion 101.

Il en est de même pour les pistes de retour de courant 12 à n2 des circuits de dérivation 10 à n0.

Par ailleurs, chaque cellule 1 à n étant connectée en série aux autres cellules de l'ensemble 200 et au support d'interconnexion 101, un niveau de tension est produit et peut être mesuré par le support de contrôle 300 de l'état de santé de l'ensemble de stockage d'énergie 200.

Selon un aspect de l'invention, des circuits de mesure de tension pour chacune des cellules de stockage d'énergie 1 à n de l'ensemble 200 sont intégrés au circuit conducteur 800.

Dans un mode de réalisation préféré de l'invention, ces circuits de mesure de tension sont identiques aux circuits de dérivation 10 à n0 précités.

Toutefois, certains des circuits de dérivation 10 à n0 ne sont pas utilisés pour la mesure de tension dès lors qu'ils donneraient une mesure redondante avec une mesure déjà effectuée. Ainsi, il est possible de diminuer le nombre de circuit de mesure du support de contrôle 300 pour réaliser la surveillance de toutes les cellules de stockage d'énergie.

Par exemple, en s'appuyant sur la figure, pour la cellule 1 de stockage d'énergie les pistes conductrices 11 et 12 formant le circuit de dérivation 10 correspondent aux pistes conductrices définissant le chemin de mesure V1 de cette cellule 1 particulière.

Pour la cellule de stockage 2, le chemin de mesure de cette cellule 2 particulière correspond aux pistes 11 et 22.

Les lignes de détection de potentiel 11 et 22 s'étendent de part et d'autre de la cellule 2 vers un circuit de détection de tension présent sur le support de contrôle 300 de l'état de santé de l'ensemble 200.

Pour effectuer la mesure de tension avec une certaine précision, il faut placer non seulement le moyen d'activation/désactivation 23 commandant le circuit de dérivation 20 concerné dans un état non conducteur, mais également les moyens d'activation (13 et 33) des circuits de dérivation adjacents qui possèdent des conducteurs communs (11 et 22) avec le circuit de mesure de V2.

De même, afin de réaliser la mesure de la cellule 3, il sera nécessaire de s'affranchir de tout courant dans les pistes (22 et 31) donc de placer les moyens d'activation 23 et 43 dans un état non conducteur
Le positionnement des circuits de dérivation dans un état non conducteur ont pour but de s'affranchir de la chute de tension générée dans les pistes conductrices par le passage de courant qui se rajouterait à la valeur de tension à mesurer et fausserait la mesure.

Un exemple des différentes lignes de mesure de potentiel d'un circuit électrique 800 configuré pour un système d'interconnexion 100 selon l'invention, est représenté sur la figure 7 pour un ensemble 200 de douze cellules de stockage d'énergie.

Les lignes Vn+ et Vn- représentent, respectivement, les potentiels mesurés au niveau de la borne polaire 500 positive et de la borne polaire 500 négative de cellules de stockage d'énergie.

D'autre part, les lignes CPC1 à CPC12 représentent, respectivement, les potentiels mesurés au niveau des pistes conductrices comprenant les résistances de dissipation d'énergie des cellules de stockage d'énergie 1 à 12.

De préférence, afin d'effectuer les mesures de tension, les interrupteurs 13 à n3 sont câblés entre chaque couple de pistes (Vn, CPCn) d'une cellule de stockage d'énergie particulière.

La surface électriquement conductrice du support d'interconnexion 101 est traitée en vue de présenter l'impression conductrice 800 mentionnée plus haut en relation avec les figures 6 et 7.

Avantageusement, le contact électrique entre l'impression conductrice 800 et les bornes polaires 500 des cellules de stockage d'énergie est réalisé, d'une manière connue en soi, par soudage, brasage ou collage.

Plus précisément, pour une borne polaire 500 particulière telle qu'illustré sur la figure 3, le contact brasé, soudé ou collé s'établit par la mise en contact d'un oeillet d'interconnexion 152 d'une découpe 150, présentant sur sa surface supérieure 157 dénudée une partie du circuit conducteur 800, avec la face intérieure 512 de l'épaulement supérieur 510 de la borne polaire 500.

Selon un mode de réalisation préféré de l'invention, les pistes conductrices de chaque circuit de dérivation/mesure 10 à n0 sont configurées de façon à s'étendre, à partir de chaque découpe 110, 120 et 150 destinées à recevoir les bornes polaires 500 des cellules, longitudinalement, suivant la longueur du support d'interconnexion 101 vers l'extrémité 102 proche du support de contrôle 300.

A cette extrémité 102, elles sont reliées à une terminaison électrique, connue en soi, comprenant le nombre de voies nécessaires.

De préférence, cette terminaison électrique est un connecteur 930 serti ou soudé sur le support d'interconnexion 101.

Il connecte l'impression conductrice 800 sur une embase de connexion du support de contrôle 300 via une zone de connexion 940 comprenant des contacts de type agrafe.

Par ailleurs, avantageusement, un seul et même oeillet d'interconnexion est utilisé pour connecter toutes les pistes provenant ou partant des bornes de cellules adjacentes connectées entre elles réalisant ainsi un point de même potentiel électrique.

D'autre part, les pistes conductrices définies par la présence d'éléments limiteurs de courant Rn, électriquement résistifs et thermiquement conducteurs, doivent présenter une résistance donnée.

Pour cela, conformément aux règles du routage des pistes conductrices, on choisit un couple longueur/largeur de piste adapté à la résistivité que l'on recherche.

Selon un autre aspect de l'invention, les résistances de dissipation d'énergie Rn sont constituées par des pistes de courant du circuit conducteur 800 et, plus précisément, du circuit de mesure et de dérivation de chaque cellule 10 à n0, la valeur desdites résistances Rn étant constituée par la résistance de cheminement de la piste correspondante entre la borne de la cellule à contourner et le système de contrôle 300.

Les longueurs des résistances de dissipation d'énergie Rn associées à chaque cellule, à section constante, sont choisies de façon à être toutes identiques , quelle que soit le positionnement de la cellule en vis à vis du système d'interconnexion 100.

L'intégration dans le circuit conducteur 800 d'éléments résistifs R1 à Rn provoque une dissipation de chaleur dans le support 101 du système d'interconnexion 100.

Selon un aspect de l'invention, la répartition des pistes résistives est optimisée pour couvrir au mieux la totalité de la surface du support d'interconnexion 101 afin d'éviter une densité surfacique d'énergie produite trop importante et ne pas déséquilibrer l'homogénéité thermique de l'ensemble de stockage d'énergie 200.

D'autre part, la section de cheminement des pistes est choisie constante sur toute leur longueur afin de répartir la dissipation thermique de chaque résistance sur l'ensemble du système d'interconnexion 100.

En outre, la résistance de dissipation R1 à Rn associée à une cellule donnée chemine au droit d'un maximum de cellules adjacentes, afin de répartir au mieux l'énergie dissipée dans l'ensemble des cellules autres que la cellule contournée.

L'énergie récupérée grâce à ces configurations par les cellules de stockage d'énergie participe au maintien de la température de l'ensemble de stockage d'énergie 200. L'énergie consommée par les plaques de chauffage pour la régulation thermique de l'ensemble 200 est ainsi avantageusement diminuée.

On précisera également que les pistes de retour devant avoir une valeur maximale inférieure à un seuil fixé par le fonctionnement du système de contrôle 300, les dites pistes de retour sont réalisées avec une section la plus large possible et un cheminement le plus court et le plus droit possible entre la borne de la cellule connectée et le système de contrôle 300, en tenant compte de l'encombrement du support d'interconnexion 101, pour minimiser la valeur de la résistance de chaque piste de retour.

Enfin, selon un mode de réalisation préféré de l'invention, le système d'interconnexion 100 est, de plus, collé ou plaqué par la compression d'une épaisseur d'un matériau élastique sur les sommets des cellules en vue d'optimiser le couplage thermique.

De préférence, le matériau est de type élastomère ou alvéolaire.

Une variante de réalisation de l'invention prévoit d'augmenter ou diminuer l'épaisseur de la surface conductrice pour obtenir le meilleur compromis de section des pistes conductrices si la surface conductrice du support d'interconnexion 101 n'est pas suffisante pour faire les compromis entre largeur et longueur des conducteurs.

Selon un autre aspect de l'invention, le système d'interconnexion 100 comprend également un blindage 910 pour protéger l'impression conductrice 800 des perturbations électromagnétiques.

Conformément à l'invention, le blindage 910 est une couche de matériau conducteur séparée de l'impression conductrice 800 par une couche d'isolant 900, tel qu'illustré sur la figure 8.

Dans une variante d'exécution préférentielle, la couche de blindage 910 pourra couvrir la totalité du support d'interconnexion 100, à l'exception des moyens de retenue 110,120 et 150 et de la zone de connexion 940 du circuit conducteur 800 avec le support électronique de contrôle 300.

En revenant à la figure 7, cette couche de blindage, de potentiel Vss est connectée électriquement, vers l'extrémité 102 proche du support de contrôle 300, au plan de masse de ce dernier par l'intermédiaire du connecteur 930.

Des variantes de réalisation de la présente invention concerne un système d'interconnexion 100 présentant un support d'interconnexion 101 de structure double face ou encore multicouche.

Un exemple non limitatif de support d'interconnexion 101 multicouche comprendrait trois couches conductrices configurées, chacune, respectivement, pour présenter les pistes conductrices résistives, le blindage et les pistes de retour de courant.

La disposition, la nature, le nombre de couches peuvent faire l'objet de nombreuses variantes de réalisation. En particulier, on peut citer l'ajout d'une couche supplémentaire réalisant l'alimentation des résistances de chauffage de l'ensemble de stockage d'énergie 200.

Une autre variante de réalisation prévoit la présence de zones sur le support d'interconnexion destinées au montage de composants électroniques et, plus particulièrement, des composants de type CMS.

Dans un mode typique d'opération d'un ensemble de stockage d'énergie 200 muni du système d'interconnexion 100 selon l'invention, les cellules de stockage d'énergie connectées en série et interconnectées avec le système d'interconnexion 100 produisent un courant de charge délivré à un élément consommant de l'énergie.

Sous des conditions normales, chacun des circuits de dérivation 10 à n0 contrôlé par le support de contrôle 300 reste dans un état non activé pour ne pas interrompre le passage de courant à travers les cellules connectées.

En réponse à la mesure d'une tension d'une cellule de stockage d'énergie n particulière atteignant une consigne déterminée, le circuit de dérivation no dédié à cette cellule n est activé et le courant de charge contourne la cellule n défectueuse jusqu'à ce que sa tension diminue pour être amené vers les autres cellules de stockage d'énergie. Cette dérivation va dissiper de l'énergie sur l'ensemble de la surface du système d'interconnexion 100.

L'homme de l'art appréciera un système d'interconnexion qui, par rapport aux dispositifs connus de l'état de l'art, peut être utilisé de manière simple, fiable et efficace pour toute technologie de batterie de haute énergie. On peut citer, comme exemples non limitatifs, les technologies lithium polymère, nickel métal hybride ou encore lithium ion.

De plus, le système d'interconnexion 100 conforme à l'invention présente une flexibilité lui permettant d'adapter sa configuration à l'ensemble de stockage d'énergie 200 auquel il est destiné tout en proposant une connexion électrique précise.

Le système d'interconnexion 100 selon l'invention offre enfin l'avantage de présenter des résistances de dissipation d'énergie R1 à Rn, non unitaires, qui permettent d'une part de dériver efficacement le courant en présence d'une cellule défectueuse et d'autre part d'améliorer la régulation thermique de l'ensemble de stockage d'énergie 200.

Les références spécifiques illustrées dans les paragraphes précédents sont des exemples non limitatifs de l'invention.

## Revendications

1. Système d'interconnexion (100) de cellules de stockage d'énergie, connectées électriquement pour former un ensemble de stockage d'énergie (200), avec un support électronique de contrôle (300), chacune desdites cellules de stockage d'énergie étant dotée sur son sommet de bornes polaires (500), le système d'interconnexion (100) comprenant un support d'interconnexion (101) comportant un circuit conducteur (800) formé sur une surface électriquement conductrice, ledit circuit (800) formant liaison électrique entre le support électronique de contrôle (300) et les bornes polaires (500) auxquels il est connecté, respectivement, grâce à des moyens de connexion et grâce à des moyens de retenue (110, 120, 150), lesdits moyens de retenue (110,120,150) étant d'une part, adaptés pour venir en contact, sur les bornes polaires (500), avec des moyens d'appui (510) en vue de disposer le support d'interconnexion (101) sur les bornes polaires (500), et d'autre part, aptes à réaliser une connexion électrique directe des bornes polaires (500) au circuit conducteur (800), **caractérisé en ce qu'**il comprend un support d'interconnexion (101) flexible, et **caractérisé en ce que** ledit circuit conducteur (800) comprend, pour chacune des cellules électrochimiques de stockage d'énergie, un circuit de mesure de tension aux bornes de chaque cellule activable/désactivable indiquant un état d'énergie de la cellule et un circuit de dérivation (10, 20... n0) de courant traversant chaque cellule activable/désactivable selon l'état d'énergie de la cellule, ledit circuit de dérivation étant défini au moins par des éléments limiteurs de courant (R1,..., Rn), tout ou partie de chaque circuit de dérivation (n0) est utilisé comme circuit de mesure de la cellule correspondante et le circuit de mesure d'une cellule utilise tout ou une partie du circuit de dérivation des cellules adjacentes.

2. Système selon la revendication précédente caractérisé en ce les éléments limiteurs de courant (R1,...., Rn) sont des résistances de dissipation d'énergie.

3. Système selon l'une des revendications 1 ou 2 précédentes **caractérisé en ce que** les éléments limiteurs de courant (R1, Rn) sont aptes à être connectés alternativement sur la borne polaire (500) positive d'une cellule de stockage d'énergie et sur la borne polaire (500) négative de la cellule de stockage d'énergie suivante.

4. Système selon l'une des revendications 1 à 3 précédentes **caractérisé en ce que** les circuits de mesure et les circuits de dérivation sont dans un état activé /désactivé en coopérant avec des moyens d'activation/désactivation (13, 23,...,n3) raccordés en parallèle avec une cellule de stockage d'énergie particulière, lesdits moyens d'activation/désactivation (13, 23,...,n3) variant entre un état conducteur et un état non conducteur sont aptes à mesurer une tension aux bornes d'une cellule de stockage d'énergie lorsqu'ils se trouvent à l'état non conducteur et à dériver une partie du courant traversant la cellule de stockage d'énergie correspondante vers les éléments limiteurs de courant (R1, Rn) lorsqu'ils se trouvent à l'état conducteur.

5. Système selon l'une des revendications 1 à 4 précédentes, **caractérisé en ce que** les éléments limiteurs de courant (R1, Rn) sont constitués par des pistes de courant du circuit conducteur 800 (R1, Rn), la valeur desdits éléments étant constituée par la résistance de cheminement de la piste correspondante entre la borne de la cellule à contourner et le système électronique de contrôle (300).

6. Système selon la revendication précédente, **caractérisée en ce que** la section de cheminement de ladite piste est choisie constante sur toute sa longueur afin de répartir la dissipation thermique de l'élément limiteur de courant (R1 à Rn) sur l'ensemble du système d'interconnexion 100.

7. Système selon l'une des revendications 2 à 6 précédentes, **caractérisée en ce que** les longueurs des résistances de dissipation d'énergie (R1, Rn) associées à chaque cellule, à section constante, sont toutes identiques, quelle que soit le positionnement de la cellule en vis à vis du système d'interconnexion (100).

8. Système selon l'une des revendications 2 à 7 précédentes, **caractérisé en ce que** la résistance de dissipation (R1, Rn) associée à une cellule donnée chemine au droit d'un maximum de cellules adjacentes, afin de répartir au mieux l'énergie dissipée dans l'ensemble des cellules autres que la cellule contournée.

9. Système selon l'une des revendications 4 à 8 précédentes, **caractérisé en ce que** les moyens d'activation/désactivation (13, 23,..., n3) sont aptes à isoler électriquement la cellule à mesurer et au moins une des deux cellules adjacentes à la cellule à mesurer.

10. Système selon l'une des revendications 4 à 8 précédentes, **caractérisé en ce que** les moyens d'activation/désactivation (13, 23,..., n3) sont aptes à isoler électriquement la cellule à mesurer et chacune des deux cellules adjacentes à la cellule à mesurer.

11. Système selon l'une des revendications précédentes, **caractérisé en ce que** le circuit conducteur (800) comprend, en outre, des pistes de retour, lesdites pistes de retour étant réalisées avec une section la plus large possible et un cheminement le plus court et le plus droit possible entre la borne de la cellule connectée et le système électronique de contrôle (300).

12. Système selon l'une des revendications 1 à 11 précédentes **caractérisé en ce que** chaque circuit de dérivation (10, 20, n0) et de mesure est apte à être activé indépendamment des autres.

13. Système selon l'une des revendications précédentes **caractérisé en ce que**, pour une borne polaire (500) particulière, les moyens de retenue (110,120,150) sont constitués d'un oeillet d'interconnexion (115, 123, 152) articulé par une bretelle d'interconnexion (112, 122, 151), ladite bretelle, par torsion, mettant en contact l'oeillet avec des moyens d'appui sur la borne polaire (500), constitués par un épaulement annulaire (510).

14. Système selon la revendication précédente, **caractérisé en ce que** un seul et même oeillet d'interconnexion (115, 123, 152) est utilisé pour connecter toutes les pistes du circuit conducteur (800) provenant ou partant des bornes (500) de cellules adjacentes connectées entre elles réalisant ainsi un point de même potentiel électrique.

15. Système selon l'une des revendications 13 à 14 précédentes, **caractérisé en ce que** l'orientation des oeillets d'interconnexion (115, 123, 152) est symétrique par rapport à l'axe longitudinal du système.

16. Système selon l'une des revendications précédentes **caractérisé en ce que** le support d'interconnexion (101) est composé d'un substrat isolant de type polyester et d'une surface électriquement conductrice d'aluminium.

17. Système selon l'une des revendications précédentes **caractérisé en ce qu'**il comprend, en outre, des moyens de protection contre les perturbations électromagnétiques.

18. Système selon la revendication précédente **caractérisé en ce que** les moyens de protection contre les perturbations électromagnétiques sont constituées par une couche de blindage (910), isolée du circuit conducteur (800) et connectée électriquement à un plan de masse du support électronique de contrôle (300).

19. Système selon la revendication précédente, **caractérisé en ce que** la couche de blindage (910) s'étend sur la totalité du support d'interconnexion (101), à l'exception des moyens de retenue (110,120,150) et de la zone de connexion des pistes du circuit conducteur (800).

20. Système selon l'une des revendications précédentes **caractérisé en ce qu'**il comprend, en outre des moyens de connexion de puissance aptes à connecter en série les cellules de stockage d'énergie de l'ensemble de stockage d'énergie (200) les unes aux autres.

21. Système selon la revendication précédente **caractérisé en ce que** lesdits moyens de connexion de puissance comprennent une pièce de connexion électroconductrice (540) et des organes ressorts (550) pour connecter ensemble deux bornes polaires (500) de deux cellules de stockage d'énergie juxtaposées.

22. Système selon l'une des revendications précédentes **caractérisé en ce que** les cellules de stockage d'énergie formant l'ensemble de stockage d'énergie (200) sont des cellules sélectionnées parmi des cellules métal hybride, des cellules lithium ion ou des cellules lithium polymère.

23. Ensemble de stockage d'énergie (200) formé d'un assemblage de cellules de stockage d'énergie connectées électriquement les unes aux autres comprenant un système d'interconnexion (100) conforme à l'une des revendications 1 à 22.

24. Procédé d'interconnexion de plusieurs cellules de stockage d'énergie, connectées électriquement pour former un ensemble de stockage d'énergie (200), avec un support électronique de contrôle (300), chacune desdits cellules de stockage d'énergie étant dotée sur son sommet de bornes polaires (500), le procédé étant **caractérisé en ce qu'**il met en oeuvre une étape d'interconnexion au moins réalisée par :
- la formation d'un circuit conducteur (800) sur une surface électriquement conductrice d'un support d'interconnexion (101) flexible déposé sur le sommet desdites cellules, ledit circuit (800) formant liaison électrique entre le support électronique de contrôle (300) et les bornes polaires (500) de chaque cellule;
- la connexion audit circuit conducteur (800) du support électronique de contrôle (300) ;
- la mise en contact de moyens d'appui (512) des bornes polaires (500) avec des moyens de retenue (110,120,150) du support d'interconnexion (101) en vue de disposer les bornes polaires (500) sur le support d'interconnexion (101) ;
- la connexion électrique directe des moyens d'appui (510) des bornes polaires (500) avec les moyens de retenue (110,120,150) du support d'interconnexion (101), et
**caractérisé en ce que** le circuit conducteur (800) présente, pour chacune des cellules de stockage d'énergie, un circuit de mesure de tension aux bornes de chaque cellule activable/désactivable indiquant un état d'énergie de la cellule et un circuit de dérivation (10, 20, n0) de courant traversant chaque cellule activable/désactivable selon l'état d'énergie d'une cellule particulière, ledit circuit de dérivation étant au moins défini par des éléments limiteurs de courant (R1,..., Rn), tout ou partie de chaque circuit de dérivation (10, 20, n0) est utilisé comme circuit de mesure de la cellule correspondante et le circuit de mesure d'une cellule utilise tout ou partie du circuit de dérivation des cellules adjacentes.

25. Procédé selon la revendication précédente **caractérisé en ce que** les éléments limiteurs de courant (R1,Rn) sont des résistances de dissipation d'énergie.

26. Procédé selon l'une des revendications 24 ou 25 précédentes **caractérisé en ce que** les éléments limiteurs de courant sont connectés alternativement sur une borne polaire (500) positive d'une cellule de stockage d'énergie et sur une borne polaire (500) négative de la cellule de stockage d'énergie suivante.

27. Procédé selon l'une des revendications 24 à 26 précédentes **caractérisé en ce que** les circuits de mesure et les circuits de dérivation (10, 20, n0) sont dans un état activé/désactivé en coopérant avec des moyens d'activation/désactivation (13, 23,... n3) raccordés en parallèle avec une cellule de stockage d'énergie particulière, lesdits moyens d'activation/désactivation (13, 23,... n3), variant entre un état conducteur et un état non conducteur, mesure une tension aux bornes d'une cellule de stockage d'énergie particulière lorsqu'ils se trouvent à l'état non conducteur et dérivent une partie du courant traversant la cellule de stockage d'énergie correspondante vers les éléments limiteurs de courant (R1, Rn) lorsqu'ils se trouvent à l'état conducteur.

28. Procédé selon l'une des revendications 24 à 27 précédentes **caractérisé en ce que** chaque circuit de dérivation (10, 20, n0) et de mesure peut être activé indépendamment des autres.

29. Procédé selon la revendication 28 précédente, **caractérisé en ce que** les moyens d'activation/désactivation (13, 23,... n3) sont aptes à isoler électriquement la cellule à mesurer et au moins une des deux cellules adjacentes à la cellule à mesurer.

30. Procédé selon la revendication 28 précédente, **caractérisé en ce que** les moyens d'activation/désactivation (13, 23,... n3) sont aptes à isoler électriquement la cellule à mesurer et chacune des deux cellules adjacentes à la cellule à mesurer.

31. Procédé selon l'une des revendications 24 à 30 précédentes **caractérisé en ce qu'**il met en oeuvre, en outre, une étape de protection du support d'interconnexion (101) contre les perturbations électromagnétiques.

32. Procédé selon l'une des revendications 24 à 31 précédentes **caractérisé en ce que** le support d'interconnexion (101) est composé d'une couche d'aluminium déposée sur un substrat isolant flexible de type polyester.

33. Procédé selon l'une des revendications 24 à 32 précédentes **caractérisé en ce qu'**il met en oeuvre, en outre, une étape de connexion en série des cellules de stockage d'énergie de l'ensemble de stockage d'énergie (200) en connectant chaque couple formé de deux bornes polaires (500) de deux cellules adjacentes, par l'intermédiaire d'une pièce de connexion électro conductrice (540) et d'organes ressort (550).

## Patentansprüche

1. Verbundsystem (100) von Energiespeicherzellen, die elektrisch angeschlossen sind, um eine Energiespeichergruppe (200) zu bilden, mit einem elektronischen Steuerträger (300), wobei jede der genannten Energiespeicherzellen auf ihrer Spitze mit Polklemmen (500) versehen ist, wobei das Verbundsystem (100) einen Verbundträger (101) umfasst, umfassend einen Leiterschaltkreis (800), der auf einer elektrisch leitenden Oberfläche gebildet ist, wobei der genannte Schaltkreis (800) eine elektrische Verbindung zwischen dem elektronischen Steuerträger (300) und den Polklemmen (500) bildet, an die er jeweils dank Verbindungsmodulen und dank Festhaltemitteln (110, 120, 150) angeschlossen ist, wobei die genannten Festhaltemittel (110, 120, 150) einerseits geeignet sind, um auf den Polklemmen (500) mit Stützmitteln (510) in Kontakt zu kommen, um den Verbundträger (101) auf den Polklemmen (500) aufzubringen, und andererseits, geeignet sind, um einen direkten elektrischen Anschluss der Polklemmen (500) an den Leiterschaltkreis (800) zu realisieren, **dadurch gekennzeichnet, dass** er einen flexiblen Verbundträger (101) umfasst, und **dadurch gekennzeichnet, dass** der genannte Leiterschaltkreis (800) für jede der elektrochemischen Energiespeicherzellen einen Spannungsmessschaltkreis an den Polen jeder aktivierbaren / deaktivierbaren Zelle, der einen Energiezustand der Zelle angibt, und einen Ableitschaltkreis (10, 20, ..., n0) des Stroms, der jede aktivierbare / deaktivierbare Zelle je nach dem Energiezustand der Zelle durchquert, umfasst, wobei der genannte Ableitschaltkreis wenigstens durch Strombegrenzungselemente (R1, ..., Rn) definiert ist, jeder Ableitschaltkreis (n0) wird ganz oder teilweise als Messschaltkreis der entsprechenden Zelle verwendet und der Messschaltkreis einer Zelle verwendet ganz oder teilweise den Ableitschaltkreis der anliegenden Zellen.

2. System gemäß dem voranstehenden Anspruch, **dadurch gekennzeichnet, dass** die Strombegrenzungselemente (R1, ..., Rn) Energieverlustwiderstände sind.

3. System gemäß einem der voranstehenden Ansprüche 1 oder 2, **dadurch gekennzeichnet, dass** die Strombegrenzungselemente (R1, Rn) geeignet sind, alternativ an der positiven Polklemme (500) einer Energiespeicherzelle und an der negativen Polklemme (500) der nachfolgenden Energiespeicherzelle angeschlossen zu sein.

4. System gemäß einem der voranstehenden Ansprüche 1 bis 3, **dadurch gekennzeichnet, dass** die Messschaltkreise und die Ableitschaltkreise sich in einem aktivierten / deaktivierten Zustand befinden, indem sie mit Aktivierungs- / Deaktivierungsmitteln (13, 23, ..., n3) zusammenwirken, die parallel an eine spezifische Energiespeicherzelle angeschlossen sind, wobei die genannten Aktivierungs- / Deaktivierungsmittel (13, 23,---, n3), die zwischen einem leitenden Zustand und einem nicht leitenden Zustand variieren, geeignet sind, eine Spannung an den Polen einer Energiespeicherzelle zu messen, wenn sie sich in einem nicht leitenden Zustand befinden, und einen Teil des Stroms, der die entsprechende Energiespeicherzelle durchquert, zu den Strombegrenzungsmitteln (R1, Rn) ableiten, wenn sie sich im leitenden Zustand befinden.

5. System gemäß einem der voranstehenden Ansprüche 1 bis 4, **dadurch gekennzeichnet, dass** die Strombegrenzungselemente (R1, Rn) durch Strombahnen des Leiterschaltkreises 800 (R1, Rn) gebildet sind, wobei der Wert der genannten Elemente durch den Wegwiderstand der entsprechenden Bahn zwischen dem Pol der zu umgehenden Zelle und dem elektronischen Steuersystem (300) gebildet ist.

6. System gemäß dem voranstehenden Anspruch, **dadurch gekennzeichnet, dass** der Pfadquerschnitt der genannten Bahn über die gesamte Länge konstant gewählt ist, um den thermischen Verlust des Strombegrenzungselements (R1 bis Rn) über das gesamte Verbundsystem 100 zu verteilen.

7. System gemäß einem der voranstehenden Ansprüche 2 bis 6, **dadurch gekennzeichnet, dass** die jeder Zelle zugeordneten Längen der Energieverlustwiderstände (R1, Rn) mit konstantem Querschnitt unabhängig von der Positionierung der Zelle gegenüber dem Verbundsystem (100) alle identisch sind.

8. System gemäß einem der voranstehenden Ansprüche 2 bis 7, **dadurch gekennzeichnet, dass** der Verlustwiderstand (R1, Rn), der einer bestimmten Zelle zugeordnet ist, gegenüber einem Maximum von anliegenden Zellen verläuft, um die verlorene Energie in allen Zellen mit Ausnahme der umgangenen Zelle optimal zu verteilen.

9. System gemäß einem der voranstehenden Ansprüche 4 bis 8, **dadurch gekennzeichnet, dass** die Aktivierungs- / Deaktivierungsmittel (13, 23, ..., n3) geeignet sind, die zu messende Zelle elektrisch zu isolieren und wenigstens eine der zwei, der zu messenden Zelle anliegenden Zellen zu messen.

10. System gemäß einem der voranstehenden Ansprüche 4 bis 8, **dadurch gekennzeichnet, dass** die Aktivierungs- / Deaktivierungsmittel (13, 23, ..., n3) geeignet sind, die zu messende Zelle elektrisch und jede der zwei an der zu messenden Zelle anliegenden Zellen zu isolieren.

11. System gemäß einem der voranstehenden Ansprüche, **dadurch gekennzeichnet, dass** der Leiterschaltkreis (800) darüber hinaus Rücklaufbahnen umfasst, wobei die genannten Rücklaufbahnen mit einem Querschnitt, der so breit wie möglich ist, und einem Weg, der so kurz und so gerade wie möglich ist, zwischen dem Pol der angeschlossenen Zelle und dem elektronischen Steuersystem (300) realisiert sind.

12. System gemäß einem der voranstehenden Ansprüche 1 bis 11, **dadurch gekennzeichnet, dass** jeder Ableitungs- (10, 20, n0) und Messschaltkreis geeignet ist, unabhängig von den anderen aktiviert zu sein.

13. System gemäß einem der voranstehenden Ansprüche, **dadurch gekennzeichnet, dass** die Festhaltemittel (110, 120, 150) bei einer Polklemme (500) aus einer Verbundöse (115, 123, 152) gebildet sind, die durch eine Verbundschlaufe (112, 122, 151) artikuliert ist, wobei die genannte Schlaufe per Torsion die Öse mit Stützmitteln auf der Polklemme (500) in Kontakt bringen, die durch einen ringförmigen Absatz (510) gebildet sind.

14. System gemäß dem voranstehenden Anspruch, **dadurch gekennzeichnet, dass** eine und dieselbe Verbundöse (115, 123, 152) verwendet wird, um alle Bahnen des Leiterschaltkreises (800) anzuschließen, die aus an Polen (500) anliegenden, untereinander angeschlossenen Zellen stammen oder abgehen und somit einen Punkt eines und desselben elektrischen Potenzials realisieren.

15. System gemäß einem der voranstehenden Ansprüche 13 bis 14, **dadurch gekennzeichnet, dass** die Ausrichtung der Verbundösen (115, 123, 152) im Verhältnis zur Längsachse des Systems symmetrisch ist.

16. System gemäß einem der voranstehenden Ansprüche, **dadurch gekennzeichnet, dass** der Verbundträger (101) aus einem isolierenden Substrat vom Typ Polyester und einer elektrisch leitenden Aluminiumoberfläche gebildet ist.

17. System gemäß einem der voranstehenden Ansprüche, **dadurch gekennzeichnet, dass** es darüber hinaus Schutzmittel vor elektromagnetischen Störungen umfasst.

18. System gemäß dem voranstehenden Anspruch, **dadurch gekennzeichnet, dass** die Schutzmittel vor den elektromagnetischen Störungen durch eine Panzerschicht (910) gebildet sind, die von dem Leiterschaltkreis (800) isoliert und elektrisch an eine Grundplatte des elektronischen Steuerträgers (300) angeschlossen ist.

19. System gemäß dem voranstehenden Anspruch, **dadurch gekennzeichnet, dass** die Panzerschicht (910) sich mit Ausnahme der Festhaltemittel (110, 120, 150) und des Anschlussbereichs der Bahnen des Leiterschaltkreises (800) auf die Gesamtheit des Verbundsystems (101) erstreckt.

20. System gemäß einem der voranstehenden Ansprüche, **dadurch gekennzeichnet, dass** es darüber hinaus Leistungsanschlussmittel umfasst, die geeignet sind, die Energiespeicherzellen der Energiespeichergruppe (200) jeweils aneinander in Serie anzuschließen.

21. System gemäß dem voranstehenden Anschluss, **dadurch gekennzeichnet, dass** ihre Leistungsanschlussmittel ein elektrisch leitendes Anschlussmittel (540) und Federorgane (550) umfassen, um zwei Polklemmen (500) von zwei nebeneinander angeordnete Energiespeicherzellen aneinander anzuschließen.

22. System gemäß einem der voranstehenden Ansprüche, **dadurch gekennzeichnet, dass** die Energiespeicherzellen, die die Energiespeichergruppe (200) bilden, Zellen sind, die aus Hybridmetallzellen, Ion-Lithiumzellen oder Polymer-Lithiumzellen ausgewählte Zellen sind.

23. Energiespeichergruppe (200), die aus einer Montage aus Energiespeicherzellen gebildet ist, die elektrisch aneinander angeschlossen sind, umfassend ein Verbundsystem (100) gemäß einem der Ansprüche 1 bis 22.

24. Verbundverfahren aus mehreren Energiespeicherzellen, die elektrisch angeschlossen sind, um eine Energiespeichergruppe (200) zu bilden, mit einem elektronischen Steuerträger (300), wobei jede der genannten Energiespeicherzellen auf ihrer Spitze mit Polklemmen (500) bestückt ist, wobei das Verfahren **dadurch gekennzeichnet ist, dass** es einen Verbundschritt umsetzt, der wenigstens realisiert ist durch:
- die Bildung eines Leiterschaltkreises (800) auf einer elektrisch leitenden Oberfläche eines flexiblen Verbundträgers (101), der auf der Spitze der genannten Zellen aufgebracht ist, wobei der genannte Schaltkreis (800) eine elektrische Verbindung zwischen dem elektronischen Steuerträger (300) und den Polklemmen (500) jeder Zelle bildet;
- den Anschluss an den genannten Leiterschaltkreis (800) des elektronischen Steuerträgers (300);
- das Kontaktieren von Stützmitteln (512) der Polklemmen (500) mit Festhaltemitteln (110, 120, 150) des Verbundträgers (101) zum Aufbringen der Polklemmen (500) auf den Verbundträger (101);
- den direkten elektrischen Anschluss der Stützmittel (510) der Polklemmen (500) mit den Festhaltemitteln (110, 120, 150) des Verbundträgers (101), und
**dadurch gekennzeichnet, dass** der Leiterschaltkreis (800) für jede der Energiespeicherzellen einen Messschaltkreis der Spannung an den Polen jeder aktivierbaren / deaktivierbaren Zelle aufweist, die einen Energiezustand der Zelle und einen Ableitschaltkreis (10, 20, n0) des Stroms angibt, der jede aktivierbare / deaktivierbare Zelle gemäß dem Energiezustand einer bestimmten Zelle durchquert, wobei der genannte Ableitschaltkreis wenigstens durch die Strombegrenzungselemente (R1, ..., Rn) definiert ist, jeder Ableitschaltkreis (10, 20, n0) wird ganz oder teilweise als Messschaltkreis der entsprechenden Zelle verwendet und der Messschaltkreis einer Zelle verwendet ganz oder teilweise den Ableitschaltkreis der anliegenden Zellen.

25. Verfahren gemäß dem voranstehenden Anspruch, **dadurch gekennzeichnet, dass** die Strombegrenzungselemente (R1, Rn) Energieverlustwiderstände sind.

26. Verfahren gemäß einem der voranstehenden Ansprüche 24 oder 25, **dadurch gekennzeichnet, dass** die Strombegrenzungselemente alternativ auf einer positiven Polklemme (500) einer Energiespeicherzelle und auf einer negativen Polklemme (500) der nachfolgenden Energiespeicherzelle angeschlossen sind.

27. Verfahren gemäß einem der voranstehenden Ansprüche 24 bis 26, **dadurch gekennzeichnet, dass** die Messschaltkreise und die Ableitschaltkreise (10, 20, n0) sich in einem aktivierten / deaktivierten Zustand befinden und mit Aktivierungs- / Deaktivierungsmitteln (13, 23, ..., n3) zusammenwirken, die parallel zu einer bestimmten Energiespeicherzelle angeschlossen sind, wobei die genannten Aktivierungs- / Deaktivierungsmittel (13, 23, ..., n3) zwischen einem leitenden Zustand und einem nicht leitenden Zustand variieren, eine Spannung an den Polen einer bestimmten Energiespeicherzelle misst, wenn sie sich im nicht leitenden Zustand befinden und einen Teil des Stroms zu den Strombegrenzungselementen (R1, Rn) ableiten, der die entsprechende Energiespeicherzelle durchquert, wenn sie sich im leitenden Zustand befinden.

28. Verfahren gemäß einem der voranstehenden Ansprüche 24 bis 27, **dadurch gekennzeichnet, dass** jeder Ableitschalt- (10, 20, n0) et Messschaltkreis unabhängig von den anderen aktiviert werden kann.

29. Verfahren gemäß dem voranstehenden Anspruch 28, **dadurch gekennzeichnet, dass** die Aktivierungs- / Deaktivierungsmittel (13, 23, ... n3) geeignet sind, die zu messende Zelle und wenigstens eine der zwei, der zu messenden Zelle anliegenden Zellen elektrisch zu isolieren.

30. Verfahren gemäß dem voranstehenden Anspruch 28, **dadurch gekennzeichnet, dass** die Aktivierungs- / Deaktivierungsmittel (13, 23, ... n3) geeignet sind, die zu messende Zelle und jede der zwei, an der zu messenden Zelle anliegenden Zellen elektrisch zu isolieren.

31. Verfahren gemäß einem der voranstehenden Ansprüche 24 bis 30, **dadurch gekennzeichnet, dass** es darüber hinaus einen Schutzschritt des Verbundträgers (101) vor elektromagnetischen Störungen umsetzt.

32. Verfahren gemäß einem der voranstehenden Ansprüche 24 bis 31, **dadurch gekennzeichnet, dass** der Verbundträger (101) sich aus einer Aluminiumschicht zusammensetzt, die auf einem isolierenden, flexiblen Substrat vom Typ Polyester aufgebracht ist.

33. Verfahren gemäß einem der voranstehenden Ansprüche 24 bis 32, **dadurch gekennzeichnet, dass** es darüber hinaus einen Anschlussschritt in Serie der Energiespeicherzellen der Energiespeichergruppe (200) umsetzt, indem jedes aus zwei Polklemmen (500) von zwei anliegenden Zellen gebildete Paar mittels eines elektrisch leitenden Anschlussstücks (540) und Federorganen (550) angeschlossen wird.

## Claims

1. A system (100) for interconnecting energy storage cells electrically connected to form an energy storage assembly (200), with an electronic control support (300), each of said energy storage cells being provided with polar terminals (500) on the top thereof, the interconnecting system (100) comprising an interconnecting support (101) including a conductive circuit (800) formed on an electrically conductive surface, said circuit (800) forming an electrical link between the electronic control support (300) and the polar terminals (500) to which it is connected, respectively, thanks to connecting means and thanks to retaining means (110, 120, 150), said retaining means (110, 120, 150) being on the one hand, adapted to contact, on the polar terminals (500), bearing means (510) for providing the interconnecting support (101) on the polar terminals (500), and on the other hand, able to make a direct electrical connection of the polar terminals (500) to the conductive circuit (800), **characterised in that** it comprises a flexible interconnecting support (101), and **characterised in that** said conductive circuit (800) comprises, for each of the energy storage electrochemical cells, a circuit for measuring the voltage across each activatable/deactivatable cell indicating an energy state of the cell and a current by-pass circuit (10, 20... n0) passing through each activatable/deactivatable cell depending on the energy state of the cell, said by-pass circuit being defined at least by current limiting elements (R1, ..., Rn), all or part of each by-pass circuit (n0) is used as a circuit for measuring the corresponding cell and the circuit for measuring a cell uses all or part of the by-pass circuit of the adjacent cells.

2. The system according to the preceding claim, **characterised in that** the current limiting elements (R1, ..., Rn) are energy dissipating resistors.

3. The system according to one of the preceding claims 1 or 2, **characterised in that** the current limiting elements (R1, Rn) are able to be alternately connected to the positive polar terminal (500) of an energy storage cell and to the negative polar terminal (500) of the next energy storage cell.

4. The system according to one of the preceding claims 1 to 3, **characterised in that** the measuring circuits and the by-pass circuits are in an activated/deactivated state by cooperating with activation/deactivation means (13, 23, ..., n3) connected in parallel with a particular energy storage cell, said activation/deactivation means (13, 23, ..., n3) switching between a conducting state and a non-conducting state are able to measure a voltage across an energy storage cell when they are in the non-conducting state and to by-pass part of the current passing through the corresponding energy storage cell to the current limiting elements (R1, Rn) when they are in the conductive state.

5. The system according to one of the preceding claims 1 to 4, **characterised in that** the current limiting elements (R1, Rn) consist of current tracks of the conductive circuit 800 (R1, Rn), the value of said elements consisting of the path resistance of the corresponding track between the terminal of the cell to be shunted and the electronic control system (300).

6. The system according to the preceding claim, **characterised in that** the path cross-section area of said track is chosen constant over the entire length thereof in order to distribute heat dissipation of the current limiting element (R1 to Rn) on the entire interconnecting system 100.

7. The system according to one of the preceding claims 2 to 6, **characterised in that** the lengths of the energy dissipating resistors (R1, Rn) associated with each cell, with a constant cross-section area, are all identical, regardless of the positioning of the cell facing the interconnecting system (100).

8. The system according to one of the preceding claims 2 to 7, **characterised in that** the dissipating resistor (R1, Rn) associated with a given cell runs at the same level than a maximum of adjacent cells, in order to distribute at best the energy dissipated in all the cells other than the shunted cell.

9. The system according to one of the preceding claims 4 to 8, **characterised in that** the activation/deactivation means (13, 23, ..., n3) are able to electrically insulate the cell to be measured and at least one of the two adjacent cells to the cell to be measured.

10. The system according to one of the preceding claims 4 to 8, **characterised in that** the activation/deactivation means (13, 23, ..., n3) are able to electrically insulate the cell to be measured and each of both adjacent cells to the cell to be measured.

11. The system according to one of the preceding claims, **characterised in that** the conductive circuit (800) further comprises return tracks, said return tracks being made with the widest possible cross-section area and the shortest and as straight as possible path between the terminal of the connected cell and the electronic control system (300).

12. The system according to one of the preceding claims 1 to 11, **characterised in that** each by-pass (10, 20, n0) and measuring circuit is able to be activated independently of the others.

13. The system according to one of the preceding claims, **characterised in that**, for a particular polar terminal (500), the retaining means (110, 120, 150) consist by an interconnecting eyelet (115, 123, 152) hinged to an interconnecting jumper (112, 122, 151), said jumper torsionally contacting the eyelet with means for bearing on the polar terminal (500), consisting of an annular shoulder (510).

14. The system according to the preceding claim, **characterised in that** a single interconnecting eyelet (115, 123, 152) is used to connect all the tracks of the conductive circuit (800) coming from or extending from the terminals (500) of adjacent cells connected to each other thus making a point of a same electric potential.

15. The system according to one of the preceding claims 13 to 14, **characterised in that** the orientation of the interconnecting eyelets (115, 123, 152) is symmetrical with respect to the longitudinal axis of the system.

16. The system according to one of the preceding claims, **characterised in that** the interconnecting support (101) is comprised of a polyester type insulating substrate and of an aluminium electrically conductive surface.

17. The system according to one of the preceding claims, **characterised in that** it further comprises electromagnetic disturbance protective means.

18. The system according to the preceding claim, **characterised in that** the electromagnetic disturbance protective means consist of a shielding layer (910), insulated from the conductive circuit (800) and electrically connected to a ground plane of the electronic control support (300).

19. The system according to the preceding claim, **characterised in that** the shielding layer (910) extends over the entire interconnecting support (101), except for the retaining means (110, 120, 150) and the zone for connecting the tracks of the conductive circuit (800).

20. The system according to one of the preceding claims, **characterised in that** it further comprises power connecting means able to connect in series the energy storage cells of the energy storage assembly (200) to each other.

21. The system according to the preceding claim, **characterised in that** said power connecting means comprise an electroconductive connection part (540) and spring members (550) to connect two polar terminals (500) of two juxtaposed energy storage cells together.

22. The system according to one of the preceding claims, **characterised in that** the energy storage cells forming the energy storage assembly (200) are cells selected from hybrid metal cells, lithium-ion cells or lithium polymer cells.

23. An energy storage assembly (200) formed by assembling energy storage cells electrically connected to each other comprising an interconnecting system (100) in accordance with one of claims 1 to 22.

24. A method for interconnecting several energy storage cells, electrically connected to form an energy storage assembly (200), with an electronic control support (300), each of said energy storage cells being provided with polar terminals (500) on the top thereof, the method being **characterised in that** it implements an interconnecting step at least made by:
- forming a conductive circuit (800) on an electrically conductive surface of a flexible interconnecting support (101) deposited onto the top of said cells, said circuit (800) forming an electrical link between the electronic control support (300) and the polar terminals (500) of each cell;
- connecting the electronic control support (300) to said conductive circuit (800);
- contacting bearing means (512) of the polar terminals (500) with retaining means (110, 120, 150) of the interconnecting support (101) for providing the polar terminals (500) on the interconnecting support (101);
- directly electrically connecting the bearing means (510) of the polar terminals (500) with the retaining means (110, 120, 150) of the interconnecting support (101), and
**characterised in that** the conductive circuit (800) has, for each of the energy storage cells, a circuit for measuring the voltage across each activatable/deactivatable cell indicating an energy state of the cell and a current by-pass circuit (10, 20, n0) passing through each activatable/deactivatable cell depending on the energy state of a particular cell, said by-pass circuit being at least defined by current limiting elements (R1, ..., Rn), all or part of each by-pass circuit (10, 20, n0) is used as a circuit for measuring the corresponding cell and the circuit for measuring a cell uses all or part of the by-pass circuit of the adjacent cells.

25. The method according to the preceding claim, **characterised in that** the current limiting elements (R1, Rn) are energy dissipating resistors.

26. The method according to one of the preceding claims 24 or 25, **characterised in that** the current limiting elements are able to be alternately connected to the positive polar terminal (500) of an energy storage cell and to the negative polar terminal (500) of the next energy storage cell.

27. The method according to one of the preceding claims 24 to 26, **characterised in that** the measuring circuits and the by-pass circuits (10, 20, n0) are in an activated/deactivated state by cooperating with activation/deactivation means (13, 23, ..., n3) connected in parallel with a particular energy storage cell, said activation/deactivation means (13, 23, ..., n3) switching between a conducting state and a non-conducting state, measure a voltage across a particular energy storage cell when they are in the non-conducting state and by-pass part of the current passing through the corresponding energy storage cell to the current limiting element (R1, Rn) when they are in the conductive state.

28. The method according to one of the preceding claims 24 to 27, **characterised in that** each by-pass (10, 20, n0) and measuring circuit is able to be activated independently of the others.

29. The method according to the preceding claims 28, **characterised in that**, the activation/deactivation means (13, 23, ..., n3) are able to electrically insulate the cell to be measured and at least one of the two adjacent cells to the cell to be measured.

30. The system according to the preceding claim 28, **characterised in that** the activation/deactivation means (13, 23, ..., n3) are able to electrically insulate the cell to be measured and each of both adjacent cells to the cell to be measured.

31. The method according to one of the preceding claims 24 to 30, **characterised in that** it further implements a step of protecting the interconnecting support (101) against electromagnetic disturbances.

32. The method according to one of the preceding claims 24 to 31, **characterised in that** the interconnecting support (101) is comprised of an aluminium layer deposited onto a polyester type flexible insulating substrate.

33. The method according to one of the preceding claims 24 to 32, **characterised in that** it further implements a step of connecting in series the energy storage cells of the energy storage assembly (200) by connecting each couple formed by two polar terminals (500) of two adjacent cells, through an electroconductive connection part (540) and spring members (550).
